# EUROPEAN PATENT SPECIFICATION

(11) **EP 4 023 461 B1**
(45) Date of publication and mention of the grant of the patent: **31.07.2024**
(21) Application number: 21212729.4
(22) Date of filing: 07.12.2021
(51) Int. Cl.: B60C 7/14, B29D 30/02

(54) **NON-PNEUMATIC TIRE AND WHEEL ASSEMBLY WITH REINFORCED SPOKE STRUCTURE**
LUFTLOSER REIFEN UND RADANORDNUNG MIT VERSTÄRKTER SPEICHENSTRUKTUR
PNEU NON PNEUMATIQUE ET ENSEMBLE ROUE À STRUCTURE DE RAYON RENFORCÉ

(30) Priority: 21.12.2020 US 202063128246 P; 25.10.2021 US 202117452076
(43) Date of publication of application: 06.07.2022
(73) Proprietor: The Goodyear Tire & Rubber Company, Akron, OH 44316 (US)
(72) Inventor: LETTIERI, Joseph Carmine, Hudson, 44236 (US); SPORTELLI, Francesco, 3249 Bettembourg (LU)
(74) Representative: Kutsch, Bernd

(56) References cited:
- EP-A1- 3 321 098
- JP-A- 2010 000 761
- JP-A- 2013 079 037
- JP-A- 2014 100 932
- US-A1- 2004 159 385
- US-A1- 2017 157 984
- US-A1- 2018 354 316
- US-A1- 2020 047 555

## Description

### Field of the Invention

The present invention relates generally to vehicle tires and non-pneumatic tires, and more particularly, to methods for forming a reinforced spoke structure or disk.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non pneumatic tire is desired that has all the features of the pneumatic tires without the drawback of the need for air inflation is desired.

Non-pneumatic tires having an outer annular ring having a ground contacting tread portion, a shear band, and a spoke disk connected to the shear band and having at least two spokes with each spoke having a first leg and a second leg and with a continuous strip of reinforcement in the first and second leg are known from JP-2013 079037 A1, US 2018/354316 A1, EP 3 321 098 A1, US 2020/047555 A1 and JP 2010 000761 A1.

Further non-pneumatic tires are known from JP 2014 100932 A, US 2004/0159385 A1 and US 2017/157984 A1.

### Summary of the Invention

The invention relates to methods in accordance with claims 1 and 3 respectively.

Dependent claims refer to preferred embodiments of the invention.

The methods may be used to provide a non-pneumatic tire and wheel assembly comprising an outer annular ring having a ground contacting tread portion and a shear band, one or more spoke disks, wherein each spoke disk is connected to the shear band, wherein each spoke disk has at least two spokes, wherein each spoke has a first leg and a second leg, wherein a continuous strip of reinforcement is received in the first leg and the second leg.

### Brief Description of the Drawings

The present invention will be better understood through reference to the following description and the appended drawings, in which:
FIG. 1 is a perspective view of a non-pneumatic tire and wheel assembly;
FIG. 2 is a front view of a non-pneumatic tire and wheel assembly of FIG. 1;
FIG. 3 is a cross-sectional view of a non-pneumatic tire and wheel assembly of FIG. 1;
FIG. 4 is a front view of a sector of a spoke structure for the non-pneumatic tire and wheel assembly of FIG. 1;
FIG. 5Ais a front view of the sector of the spoke structure of FIG. 4, showing the pattern layout for a first layer of reinforcement (shown in black) of the spoke structure;
FIG. 5B is a front view of the sector of the spoke structure of FIG. 4, showing the pattern layout for a first (in black) and third layer of reinforcement (in green) of the spoke structure;
FIG. 6A is a front view of the sector of the spoke structure of FIG. 4, showing the pattern layout for a first layer (in black) and a second layer (in yellow) of reinforcement of the spoke structure;
FIG. 6B is a front view of the sector of the spoke structure of FIG. 4, showing the pattern layout for a second layer (in yellow) and a fourth layer (in purple) of reinforcement of the spoke structure;
FIG. 7A illustrates a molded X spoke section showing the placement of a first and second mold insert, while FIGS. 7B and 7C illustrate a front, side view of a first and second mold insert and the reinforcement winding layup prior to molding;
FIG. 8A illustrates the winding pattern on the first and second mold inserts, while FIG. 8B illustrates the placement of the mold inserts into a mold;
FIG. 9A illustrates a front view of a molded X spoke, while FIG. 9B is a close up of the lower portion of the X spoke, FIG. 9C is a view of the upper portion of the X spoke, and FIG. 9D is a side view of the X spoke;
FIG. 10A illustrates a second embodiment of a first and second mold insert for molding X spoke section in a mold, while FIGS. 10B and 10C illustrate a front, closeup view of a first and second mold insert and the reinforcement winding layup prior to molding;
FIG. 11A illustrates a third embodiment of a first and second mold insert for molding X spoke section in a mold, while FIG. 11B illustrate a front view of a first and second mold insert and an outer scaffolding structure for holding the reinforcement winding layup prior to molding while FIG. 11C illustrates the outer scaffolding structure for the reinforcement winding; and

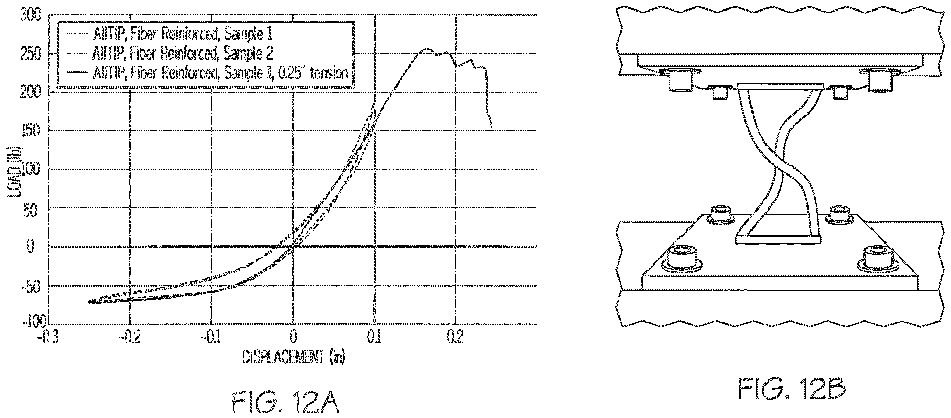

FIG. 12A illustrates load versus displacement for different reinforcements, while Fig 12b illustrates the spoke section under compressive loading.

### Definitions

"Axial direction" means in a direction parallel to an axis about which a wheel rotates during use.

"Circumferential direction" means in a direction defined by a circumference of the wheel or in a direction of a wheel's rotation about an axis.

"Equatorial Plane" means a plane perpendicular to the axis of rotation of the tire passing through the centerline of the tire.

"Meridian Plane" means a plane parallel to the axis of rotation of the tire and extending radially outward from said axis.

"Radial direction" means a direction perpendicular to an axis about which a wheel rotates.

"Hysteresis" means the dynamic loss tangent measured at 10 percent dynamic shear strain and at 25°C.

### Detailed Description of Preferred Embodiment of the Invention

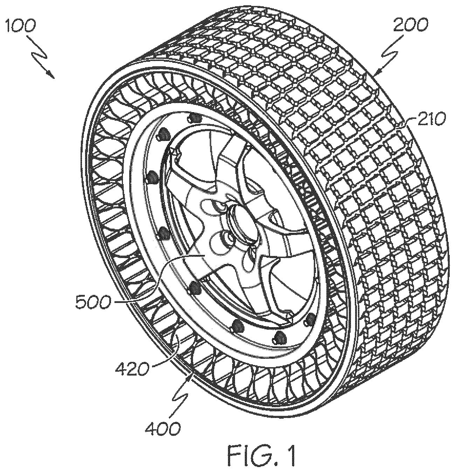

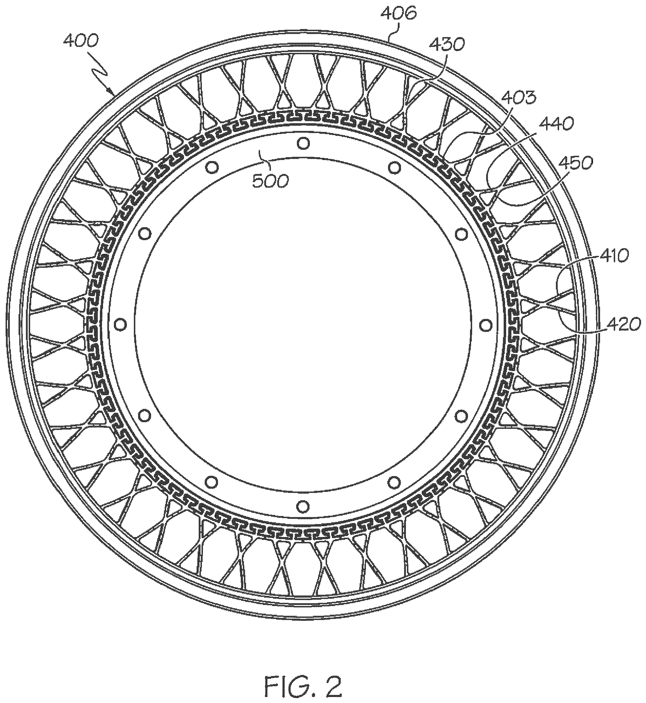

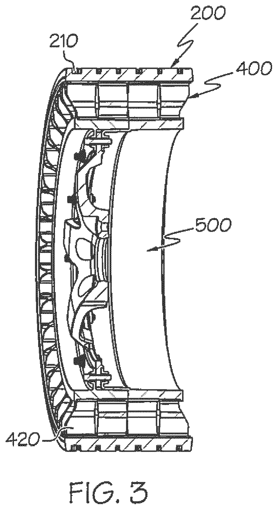

A non-pneumatic tire and wheel assembly 100 is shown in FIGS. 1-3. The non-pneumatic tire includes an outer annular tread and shear band 200 surrounding one or more spoke disks 400 which are integrally mounted to a wheel 500. The outer annular band 200 includes a radially outer surface having a ground engaging tread 210. The tread 210 may be conventional in design, and include the various elements known to those skilled in the art of tread design such as ribs, blocks, lugs, grooves, and sipes as desired to improve the performance of the tire in various conditions. The outer tread band 200 includes a shear band located radially inward of the tread and allows the non-pneumatic tire to be a top loaded structure, so that the shear band and the spokes efficiently carry the load. The shear band together with the spoke disks 400 are designed so that the stiffness under radial tension of the spoke disks 400 is directly related to the spring rate of the tire. The spoke disks 400 are designed to be structures that buckle or deform in the tire footprint yet are unable to carry a compressive load. This allows the rest of the spokes not in the footprint area the ability to carry the load. It is desired to minimize this compressive load on the spokes for the reasons set forth above and to allow the shear band to bend to overcome road obstacles. The approximate load distribution desired has approximately 90-100% of the load carried by the shear band and the upper spokes, so that the lower spokes carry virtually zero of the load and preferably less than 10%.

The shear band includes a first and second reinforced elastomer layer separated by a shear matrix of elastomer. Each reinforced layer may be formed of parallel inextensible reinforcement cords embedded in an elastomeric coating. The reinforcement cords may be steel, aramid, carbon fiber, or other inextensible structure, and may angled in the range of 0 to +/- 30 degrees relative to the tire equatorial plane. The shear matrix is preferably formed of an elastomer material having a shear modulus G in the range of 2.5 to 40 MPa, and more preferably in the range of 20 to 40 MPA.

### SPOKE DISK AND WHEEL

The non-pneumatic tire further includes at least one spoke disk 400, and preferably at least two disks which may be spaced apart at opposed ends of the non-pneumatic tire. In the tire and wheel assembly shown in FIG. 1, there may be four or more spoke disks mounted upon wheel 500. The spoke disk functions to carry the load transmitted from the shear layer. The disks are primarily loaded in tension and shear and carry no load in compression. Each spoke disk 400 is annular and has an outer annular ring 406 and a radially inner annular ring 403. Each spoke disk 400 may comprise a discrete annular disk or may comprise several sectors 405 for ease of assembly.

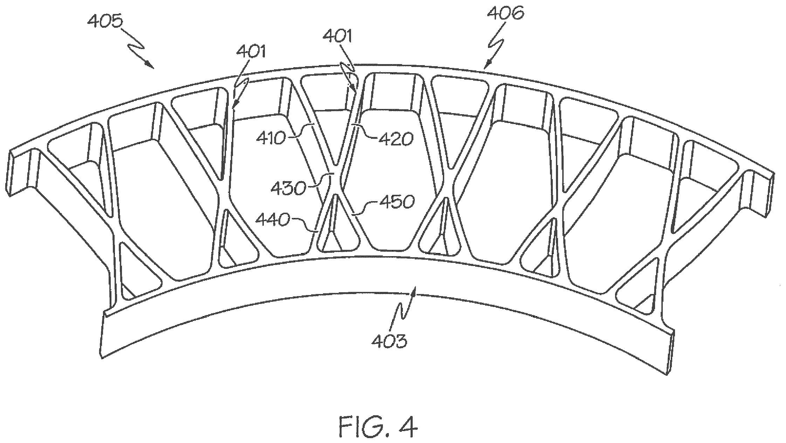

A front view of a sector 405 of a spoke disk is shown in FIG. 4. The sector as shown is 1/6 of the circumference of a spoke disk. The sector 405 has a plurality of X-shaped spokes 401. Each X-shaped spoke is formed of a first leg 402 formed of segments 410,450 that is joined to a second leg 404 formed of segments 420,440. The first leg 402 is jointed to second leg 404 at a junction 430. Each X-shaped spoke has an upper triangle formed of segments 410, 420 and a lower triangle formed of segments 440, 450.

In order to improve the load efficiency of the spoke disk, it is desired to provide one or more layers of a reinforcement to the spoke structure, preferably each spoke 401. The reinforcement may be a strip of fiberglass filaments, fiberglass tape, carbon fiber, carbon fiber tape, aramid, aramid tape, nylon fiber, PET fiber, and hybrid fibers composed of a mix of aramid, nylon, and PET fiber, and will be collectively referred to as "strip" hereinafter. The strip of reinforcement preferably has a width of 10 mm or less, and a thickness of 1 mm or less.

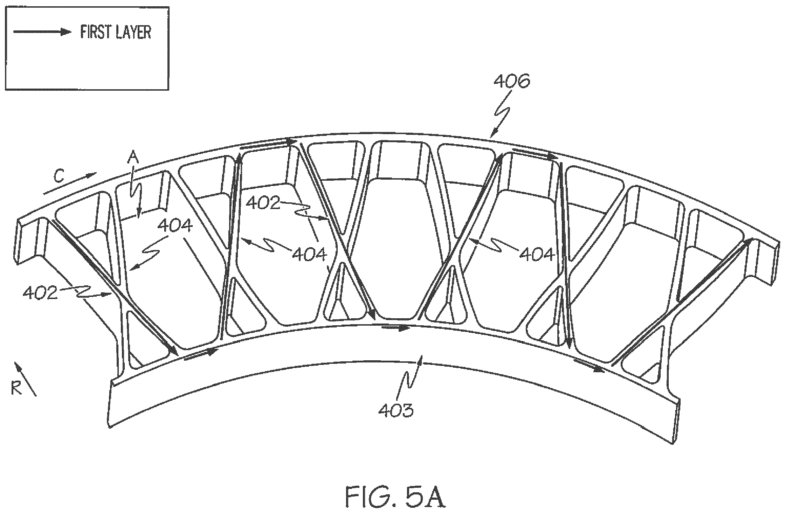

FIG. 5A illustrates the process for reinforcing each spoke 401 of the spoke sector 405 with one or more layers of a continuously wound strip. The reinforced strip of material is used to reinforce each spoke 401 of the spoke sector 405, as well as extending from one spoke 401 to an adjacent spoke 401. There is preferably multiple layers of strip windings, and are layered in the axial direction A, so there are reinforcements along the axial width of the spoke.

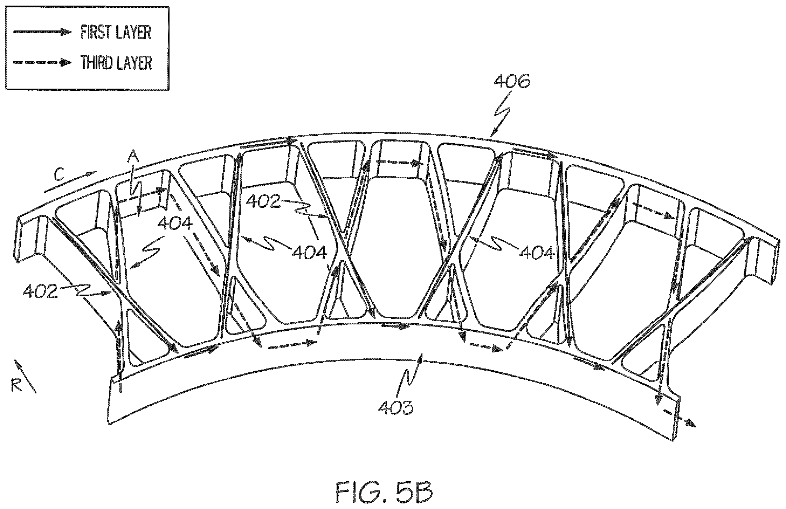

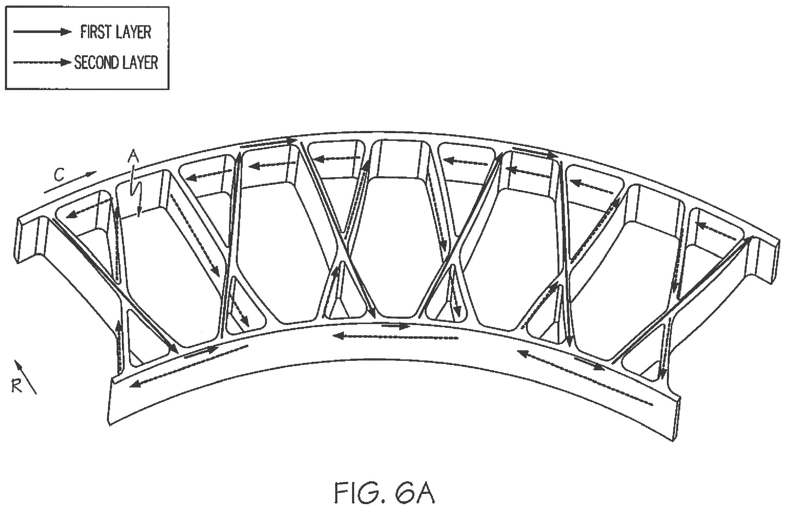

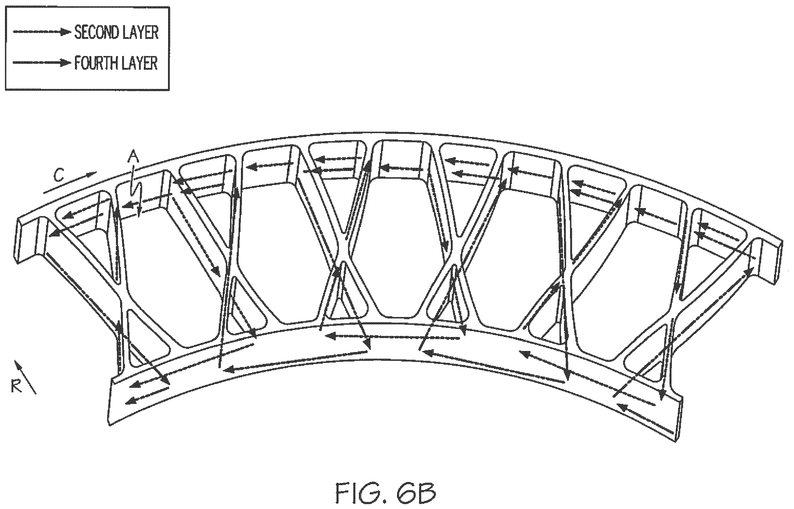

An example pattern of the winding is shown in FIGS. 5-6. The reinforced strip is continuously wound as shown in FIG. 5A, starting from the outer diameter 406 of the spoke sector extending radially inward along a first spoke leg 402 to the inner diameter 403, and then continued on the inner circumference of the inner diameter 403 over to a second spoke leg 404 of an adjacent spoke 401. The strip extends radially outward along the second spoke leg 404 and then continues in a circumferential direction along the outer circumference 406 to the next spoke, and then extends radially inward along a first leg 402 of a third spoke, repeating the pattern until the last spoke is reached. Note that the pattern of FIG. 5A only covers one spoke member of a spoke 401. In FIG. 5B, the pattern shown in FIG. 5A is repeated as the third layer, but indexed circumferentially by one X. FIG. 6A illustrates an exemplary pattern for continuously winding the strip to cover the second spoke member of the spoke. As shown in dotted arrows in FIG. 6A, the strip continues in the opposite rotational direction of the strip of FIG. 5, and at a different axial location so that the strip does not cross with itself. As shown, the strip extends radially inward along a first leg, along the inner circumference and then radially outward along a second leg. Note that the rotational direction of the windings is not relevant. FIG. 6B shows this same winding pattern, but indexed circumferentially by one X. The purpose of the indexing, as shown in FIGS. 5B and 6B, is to prevent all circumferential sections of the inner diameter (403) and outer diameter (406) from being devoid of reinforcement. The winding pattern as described by FIGS. 5 and 6 may be continued axially until the full width of the spoke is reached.

It is important that the path of the strip should not leave a gap in the junction where the spoke legs are joined together, and it is also important that the path of the strip does not intersect with itself. Rather, the tape should provide a direct, unbroken, path for the load from the outer ring to the inner ring of the spoke disk.

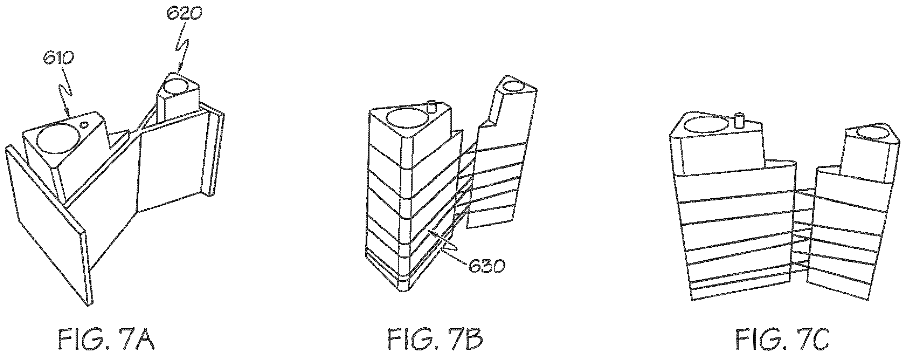

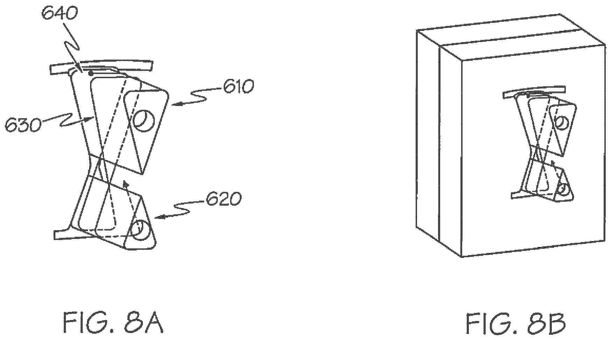

FIG. 7A illustrates the formation of a reinforced single X spoke, formed of a first and second leg. Positioned in the X spoke is a first and second mold insert 610, 620. FIGS. 7B, 7C illustrate a second embodiment wherein the strip is wound only at each spoke. FIGS. 7B, 7C illustrates the strip winding path about the mold inserts in order to form a reinforced X spoke, and further illustrate the strip windings at different axial locations. FIG. 8A illustrates the winding path of the strip, wherein the axial location of each winding is shifted to avoid the strip crossing and intersecting with an adjacent strip winding, resulting in fretting. FIG. 8A also illustrates the mold inserts, with the corners 640 of the mold inserts being radiused and protruding from the edge, so that the strip does not actually touch the sidewalls 630 of the mold inserts. The fact that the strip does not actually touch the sidewalls of the mold insert allows the resin to encapsulate the strip so that the strip is centered in the spoke leg and not located on the outer surface.

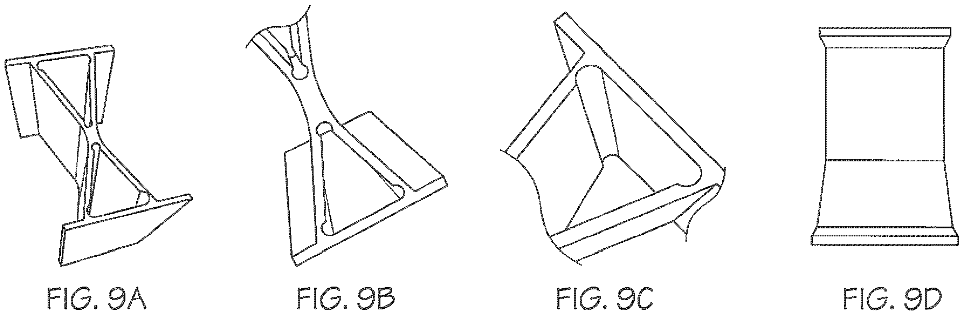

FIGS. 9A-9F illustrate a single X spoke that was injection molded with layers of continuous strip winding. The radiused intersections of the spoke legs are clearly shown.

Winding may be done either inside the mold or the resulting winding could be placed in the mold so that a soft polymer can encapsulate the strip.

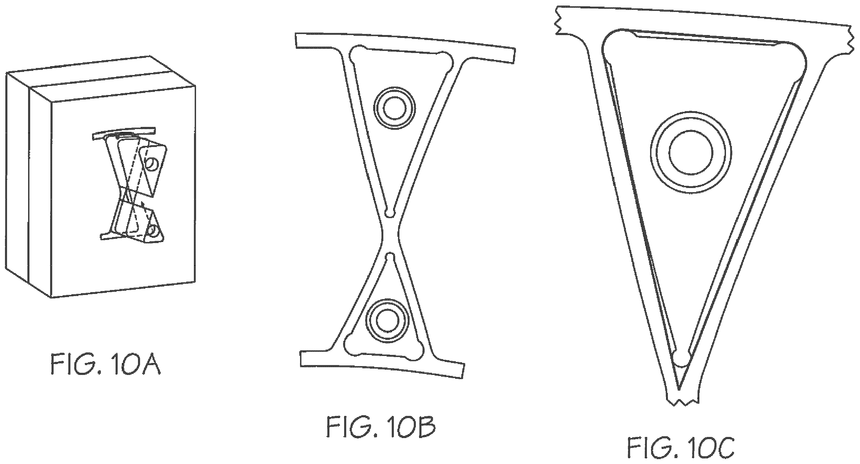

FIGS. 10B, 10C illustrate a second embodiment of mold inserts, wherein the corners of each mold insert are radiused, like Mickey mouse ears. An exemplary strip is wound in Fig 10C, illustrating how the protruding ears result in the strip not in contact with the mold walls.

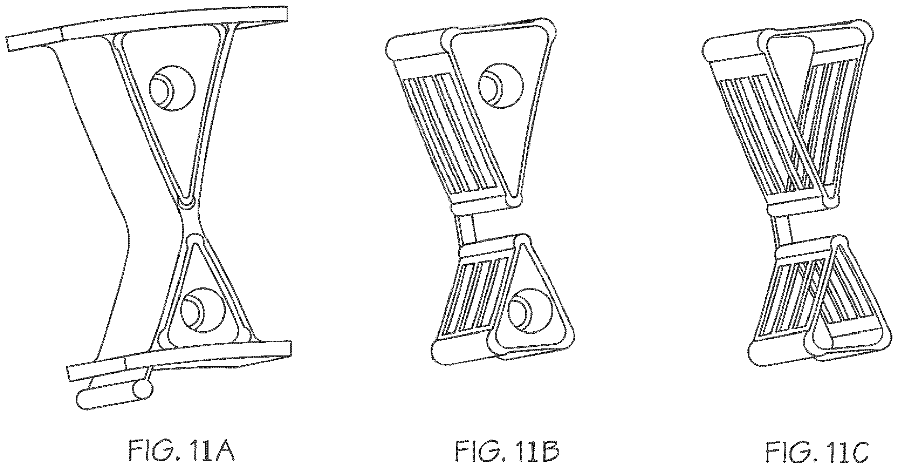

FIGS. 11A-C illustrate a third embodiment of the mold inserts, wherein a removable scaffolding structure surrounds the outer walls of the mold inserts. This scaffolding structure has radiused corners, and channels to keep the strip contained in the radial direction.

The spoke disks are preferably formed of an elastic material, more preferably, a thermoplastic elastomer. The material of the spoke disks is selected based upon one or more of the following material properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is less than -25 C, and more preferably less than -35 C. The yield strain at break is more than 30%, and more preferably more than 40%. The elongation at break is more than or equal to the yield strain, and more preferably, more than 200%. The heat deflection temperature is more than 40 C under 0.45 MPa, and more preferably more than 50 C under 0.45 MPa. No break result for the Izod and Charpy notched test at 23 C using the ISO 179/ISO180 test method. Two suitable materials for the disk are commercially available by DSM Products and sold under the trade name ARNITEL PL 420H and ARNITEL PL461.

## Claims

1. A method of forming a reinforced spoke structure for a non-pneumatic tire and wheel assembly (100), the method comprising the steps:
providing a first and second mold insert (610, 620), wherein the first and second mold insert (610, 620) are separated apart;
winding a continuous strip of reinforcement around the first mold insert (610) and around the second mold (620) insert to form a reinforced structure;
inserting the reinforced structure into a mold; and
injection molding a liquid resin to form a spoke structure.

2. The method of claim 1 wherein the continuous strip is wound in a figure eight pattern about the first and second mold insert (610, 620).

3. A method of forming a reinforced spoke disk, wherein the spoke disk (400) has a plurality of spokes (401) joining an inner hub and an outer hub, the method comprising the steps:
providing a plurality of first mold inserts (610) arranged on an outer radius, and providing a plurality of second mold inserts (620) and arranging the second mold inserts along an inner radius;
aligning the plurality of first mold inserts (610) into radial alignment with the second mold inserts (620), wherein the first mold inserts and the second mold inserts have outer walls; and
winding a continuous strip of reinforcement around an outer wall of the first and second mold inserts (610, 620) in an alternating manner thus creating a reinforced structure;
inserting the reinforced structure into a mold; and
injection molding a liquid resin to form a reinforced spoke structure.

4. The method of claim 3 wherein the continuous strip is wound from an inner radius to an outer radius.

5. The method of claim 3 or 4 wherein the continuous strip is wound in a figure eight pattern about the outer walls of the first and second mold insert (610, 620).

6. The method of claim 3, 4 or 5 wherein one or more of the corners (640) of the mold inserts (610, 620) have radiused edges.

## Patentansprüche

1. Verfahren zur Herstellung einer verstärkten Speichenstruktur für eine nicht-pneumatische Reifen- und Radanordnung (100), wobei das Verfahren die Schritte umfasst:
das Bereitstellen eines ersten und zweiten Formeinsatzes (610, 620), wobei der erste und zweite Formeinsatz (610, 620) voneinander getrennt sind;
das Aufwickeln eines durchgehenden Verstärkungsstreifens um den ersten Formeinsatz (610) und um den zweiten Formeinsatz (620), um eine verstärkte Struktur zu bilden;
das Einsetzen der verstärkten Struktur in eine Form; und
das Spritzgießen eines flüssigen Harzes zur Herstellung einer Speichenstruktur.

2. Verfahren nach Anspruch 1, wobei der durchgehende Streifen in einem Achtermuster um den ersten und zweiten Formeinsatz (610, 620) aufgewickelt wird.

3. Verfahren zur Herstellung einer verstärkten Speichenscheibe, wobei die Speichenscheibe (400) eine Vielzahl von Speichen (401) aufweist, die eine innere Nabe und eine äußere Nabe verbinden, wobei das Verfahren die folgenden Schritte umfasst:
das Bereitstellen einer Vielzahl von ersten Formeinsätzen (610), die auf einem äußeren Radius angeordnet sind, und das Bereitstellen einer Vielzahl von zweiten Formeinsätzen (620) und das Anordnen der zweiten Formeinsätze entlang eines inneren Radius;
das Ausrichten der Vielzahl von ersten Formeinsätzen (610) in radialer Ausrichtung mit den zweiten Formeinsätzen (620), wobei die ersten Formeinsätze und die zweiten Formeinsätze Außenwände haben; und
das Aufwickeln eines durchgehenden Verstärkungsstreifens um eine Außenwand des ersten und zweiten Formeinsatzes (610, 620) in abwechselnder Weise, wodurch eine verstärkte Struktur entsteht;
das Einsetzen der verstärkten Struktur in eine Form; und
das Spritzgießen eines flüssigen Harzes zur Herstellung einer verstärkten Speichenstruktur.

4. Verfahren nach Anspruch 3, wobei der durchgehende Streifen von einem Innenradius zu einem Außenradius aufgewickelt wird.

5. Verfahren nach Anspruch 3 oder 4, wobei der durchgehende Streifen in einem Achtermuster um die Außenwände des ersten und zweiten Formeinsatzes (610, 620) aufgewickelt wird.

6. Verfahren nach Anspruch 3, 4 oder 5, wobei eine oder mehrere der Ecken (640) der Formeinsätze (610, 620) gerundete Kanten aufweisen.

## Revendications

1. Procédé de formation d'une structure de rayons renforcée pour un assemblage (100) d'un bandage non pneumatique et d'une roue, le procédé comprenant les étapes dans lesquelles :
on procure un premier et un deuxième insert de moule (610, 620), dans lequel le premier et le deuxième insert de moule (610, 620) sont espacés l'un de l'autre ;
on enroule une bande continue de renforcement autour du premier insert de moule (610) et autour du deuxième insert de moule (610) afin d'obtenir une structure renforcée ;
on insère la structure renforcée dans un moule ; et
un soumet une résine liquide à un moulage par injection afin d'obtenir une structure de rayons.

2. Procédé selon la revendication 1, dans lequel on enroule la bande continue en épousant la forme du chiffre huit autour du premier et du deuxième insert de moule (610, 620).

3. Procédé de formation d'un disque à rayons renforcé, dans lequel le disque à rayons (400) possède plusieurs rayons (401) qui joignent un moyeu interne et un moyeu externe, le procédé comprenant les étapes dans lesquelles :
on procure un certain nombre de premiers inserts de moule (610) disposés sur un premier rayon, et on procure un certain nombre de deuxièmes inserts de moule (620) et on dispose les deuxièmes inserts de moule le long d'un deuxième rayon ;
on dispose lesdits plusieurs premiers inserts de moule (610) en alignement radial avec les deuxièmes inserts de moule (620), dans lequel les premiers inserts de moule et les deuxièmes inserts de moule possèdent des parois externes ; et
on enroule une bande continue de renforcement autour d'une paroi externe du premier et du deuxième insert de moule (610, 620) en alternance pour ainsi obtenir une structure renforcée ;
on insère la la structure renforcée dans un moule ; et
un soumet une résine liquide à un moulage par injection afin d'obtenir une structure de rayons renforcée.

4. Procédé selon la revendication 3, dans lequel on enroule la bande continue à partir d'un rayon interne jusqu'à un rayon externe.

5. Procédé selon la revendication 3 ou 4, dans lequel on enroule la bande continue en épousant la forme du chiffre huit autour des parois externes du premier et du deuxième insert de moule (610, 620).

6. Procédé selon la revendication 3, 4 ou 5, dans lequel un ou plusieurs des coins (640) des inserts de moule (610, 620) possèdent des bords arrondis.
